# FASCICULE DE BREVET EUROPEEN

(11) **EP 4 544 216 B1**
(45) Date de publication et mention de la délivrance du brevet: **18.02.2026**
(21) Numéro de dépôt: 23734284.5
(22) Date de dépôt: 23.06.2023
(51) Int. Cl.: F17C 1/00

(54) **COLLECTEUR D'EXPLOITATION POUR UN ENSEMBLE DE STOCKAGE ET DE DISTRIBUTION DE FLUIDE SOUS PRESSION POUR VÉHICULE**
BETRIEBSVERTEILER FÜR EINE ANORDNUNG ZUR SPEICHERUNG UND VERTEILUNG VON UNTER DRUCK STEHENDEM FLUID EINES FAHRZEUGS
OPERATION MANIFOLD FOR A VEHICLE PRESSURIZED-FLUID STORAGE AND DISTRIBUTION ASSEMBLY

(30) Priorité: 23.06.2022 FR 2206215
(43) Date de publication de la demande: 30.04.2025
(73) Titulaire: PLASTIC OMNIUM NEW ENERGIES FRANCE, 69007 Lyon (FR)
(72) Inventeur: BOPWA MUNTU, Christian, 1200 Bruxelles (BE); BARBOSA, Lorena, 1200 Bruxelles (BE); FASSMANN, Christoph, 1200 Bruxelles (BE)
(74) Mandataire: LLR
(86) Numéro de dépôt international: PCT/EP2023/067117
(87) Numéro de publication internationale: WO 2023/247755

(56) Documents cités:
- WO-A1-2021/220128
- DE-A1- 102019 218 343
- FR-A1- 3 103 875
- US-A1- 2014 130 896
- US-A1- 2021 039 489

## Description

### Domaine technique de l'invention

L'invention concerne un collecteur d'exploitation pour un ensemble de stockage et de distribution de fluide sous pression pour véhicule. L'invention concerne également un ensemble de stockage et de distribution de fluide sous pression pour véhicule comprenant un collecteur d'exploitation selon l'invention ainsi qu'un véhicule, de préférence automobile, comprenant un tel ensemble. Enfin, l'invention concerne un procédé de distribution de fluide sous pression pour véhicule, un procédé de remplissage de réservoirs de fluide sous pression et un procédé d'évacuation de fluide stocké dans des réservoirs de fluide sous pression au moyen d'un collecteur d'exploitation selon l'invention.

### Arrière-plan technique

On connaît déjà dans l'état de la technique, par exemple du document WO2021/110707, des collecteurs d'exploitation (aussi appelés par leur dénomination en anglais « manifold ») pour un ensemble de stockage et de distribution de fluide sous pression pour véhicule. Ces collecteurs d'exploitation sont notamment utilisés pour faciliter la gestion de la circulation des fluides, notamment des gaz, entre plusieurs réservoirs de fluide sous pression. Une telle pluralité de réservoirs est notamment utilisée pour des véhicules automobiles, par exemple pour le stockage de dihydrogène sous pression. En effet, l'utilisation de cette pluralité de réservoirs de capacités réduites permet d'augmenter la capacité de stockage embarquée par le véhicule, alors que l'espace disponible n'est pas compatible avec l'intégration d'un unique réservoir de stockage de grande capacité. Toutefois, l'utilisation de plusieurs réservoirs nécessite de recourir à un collecteur d'exploitation et à plusieurs organes fonctionnels, tels que des capteurs de température, des capteurs de pression ou des vannes pour assurer la gestion de la circulation des fluides entre les réservoirs et le reste du véhicule, notamment pour leur remplissage, la distribution et/ou l'évacuation des fluides. Ainsi, même si l'encombrement spatial est réduit grâce à l'utilisation d'une pluralité de réservoirs de volumes réduits, l'encombrement de l'ensemble de stockage comprenant les réservoirs, le collecteur d'exploitation et les organes fonctionnels peut être relativement complexe à gérer sur le véhicule. En outre, l'assemblage de plusieurs organes fonctionnels sur le collecteur d'exploitation entraîne un coût supplémentaire lors de l'assemblage de l'ensemble de stockage sur le véhicule.

D'autres exemples de collecteurs d'exploitation de l'état de la technique sont connus du document WO 2021/220128.

### Résumé de l'invention

L'invention a notamment pour but de réduire de manière simple et économique l'encombrement spatial d'un ensemble de stockage et de distribution de fluide sous pression pour véhicule, comprenant un collecteur d'exploitation.

À cet effet, l'invention a pour objet un collecteur d'exploitation pour un ensemble de stockage et de distribution de fluide sous pression pour véhicule, l'ensemble comprenant une pluralité de réservoirs pour fluide sous pression, le collecteur d'exploitation comportant :
- un corps présentant une pluralité d'orifices de communication, chaque orifice de communication étant configuré pour être en communication fluidique avec un réservoir,
- une électrovanne,
- une vanne manuelle,
- un canal de distribution de fluide stocké dans les réservoirs, le canal de distribution de fluide étant ménagé dans le corps et étant configuré pour être en communication fluidique avec les réservoirs via l'électrovanne et la vanne manuelle, le canal de distribution de fluide comprenant un premier clapet anti-retour destiné à empêcher un passage de fluide dans un premier sens en direction des réservoirs et à permettre un passage de fluide dans un deuxième sens, opposé au premier sens,
- un canal de remplissage des réservoirs, ménagé dans le corps et configuré pour être en communication fluidique avec les réservoirs, le canal de remplissage des réservoirs comprenant un deuxième clapet anti-retour destiné à permettre un passage de fluide dans le premier sens en direction des réservoirs et à empêcher un passage de fluide dans un sens opposé,
caractérisé en ce que la vanne manuelle est également utilisée pour assurer une communication fluidique entre le canal de remplissage des réservoirs et les réservoirs.

Ainsi, on propose un canal de distribution et un canal de remplissage de fluide distincts au moins sur une partie et qui partagent une même vanne manuelle pour assurer leur communication fluidique avec les réservoirs. Il en résulte que le nombre d'organes fonctionnels utilisés, en particulier le nombre de vannes manuelles utilisées, est diminué, ce qui permet à la fois de faire des économies lors de la fabrication du collecteur d'exploitation et de réduire l'encombrement spatial et le poids de celui-ci.

Par ailleurs, on comprend que selon la présente invention, les organes fonctionnels que sont l'électrovanne, la vanne manuelle et les premier et deuxième clapets anti-retour sont directement portés par le collecteur d'exploitation et logés dans le corps de celui-ci. Ainsi, l'encombrement spatial de l'ensemble de stockage, comprenant le collecteur d'exploitation, les organes fonctionnels et les réservoirs, est réduit. En outre, son assemblage sur le véhicule est facilité, puisque l'on peut assembler simplement le collecteur, lequel intègre les organes fonctionnels déjà installés, au lieu d'avoir à assembler chaque organe séparément sur le véhicule. De plus, les organes fonctionnels étant portés par le collecteur d'exploitation, leurs fonctions peuvent être centralisées dans celui-ci, ce qui évite de devoir équiper chaque réservoir d'au moins un de ces organes fonctionnels, de sorte que le nombre total d'organes fonctionnels utilisés peut être réduit. Ou encore, les fonctions intégrées dans le collecteur d'exploitation évitent de devoir équiper chaque embout de réservoir présent entre chaque réservoir et le collecteur d'exploitation, comme cela est le cas notamment dans l'ensemble de stockage décrit dans le document WO2021/110707. On réduit ainsi à la fois le coût de fabrication, l'encombrement spatial et le poids de l'ensemble de stockage comprenant un tel collecteur d'exploitation, tout en facilitant son utilisation.

On comprend donc que le collecteur d'exploitation se distingue d'embouts de communication disposés sur chaque réservoir ou entre chaque réservoir et le collecteur d'exploitation.

Les canaux de distribution et de remplissage sont, par exemple, obtenus par usinage du corps du collecteur. Il s'agit d'un moyen simple, efficace et léger d'obtenir ces canaux de distribution et de remplissage.

Les premier et deuxième clapets anti-retour, aussi appelés soupapes anti-retour, permettent d'imposer un unique sens de circulation au fluide, et donc d'empêcher le reflux de fluide circulant dans les canaux de distribution et de remplissage, respectivement lors de la distribution de fluide et lors du remplissage des réservoirs.

Par « électrovanne », on entend une vanne commandée électriquement qui bloque ou libère sélectivement le passage de fluide dans un conduit, éventuellement via des positions intermédiaires limitant la taille de l'ouverture de la vanne. Ici, l'électrovanne permet donc de bloquer ou libérer sélectivement le passage de fluide dans le canal de distribution. L'électrovanne permet de gérer facilement la distribution de fluide via le canal de distribution en permettant ou en empêchant le passage de fluide depuis les réservoirs vers un organe de consommation du fluide via le canal de distribution.

Par « vanne manuelle », on entend une vanne pouvant être commandée manuellement par un opérateur afin de bloquer ou libérer le passage de fluide dans un conduit. Généralement, la vanne manuelle est ouverte en condition normale d'utilisation des réservoirs, c'est-à-dire lors du remplissage et de la distribution, donc du fonctionnement courant des réservoirs. La fermeture de la vanne manuelle permet d'isoler les réservoirs sous pression, par exemple pour effectuer des opérations de maintenance nécessitant l'isolation des réservoirs.

Les réservoirs pour fluide sous pression sont par exemple des réservoirs aptes à stocker du dihydrogène sous pression, typiquement à une pression de 35 MPa (350 bar), voire de 70 MPa (700 bar), à température ambiante. On connait aussi des réservoirs aptes à stocker du gaz naturel sous pression (appelé CNG), typiquement à une pression de 20 MPa (200 bar), voire de 30 MPa (300 bar), à température ambiante. On entend par « température ambiante », une plage de températures de 20 °C ±10 °C.

On entend par « pluralité de réservoirs » au moins deux réservoirs, de préférence au moins cinq réservoirs, voire au moins dix réservoirs.

Selon un mode de réalisation, le corps du collecteur d'exploitation est un corps allongé selon un axe longitudinal principal entre deux extrémités axiales. Cette configuration est particulièrement adaptée à l'utilisation du collecteur d'exploitation avec plusieurs réservoirs alignés côte à côte. Dans ce cas, les orifices de communications sont répartis le long du corps allongé, entre les deux extrémités axiales afin d'être chacun disposé en regard d'embouts de communication respectifs des réservoirs.

L'invention peut également comporter l'une ou plusieurs des caractéristiques optionnelles suivantes, prises seules ou en combinaison.

Le collecteur d'exploitation comprend en outre un premier canal d'évacuation de fluide stocké dans les réservoirs, ménagé dans le corps du collecteur d'exploitation et destiné à mettre en communication fluidique l'intérieur des réservoirs et l'extérieur, le premier canal d'évacuation de fluide stocké dans les réservoirs comprenant une vanne manuelle d'évacuation destinée à permettre ou empêcher la communication fluidique entre l'intérieur des réservoirs et l'extérieur. Ainsi, il est possible de réaliser simplement l'évacuation du fluide hors des réservoirs et du collecteur d'exploitation. Cela est particulièrement avantageux afin de réaliser de manière simple et sécurisée des opérations de maintenance sur le collecteur d'exploitation ou sur les réservoirs. En outre, le fait que le canal d'évacuation de fluide stocké dans le réservoir soit ménagé dans le corps du collecteur d'exploitation permet de faciliter la manipulation et l'installation du collecteur d'exploitation sur les réservoirs et sur le véhicule, ainsi que de réduire son encombrement spatial.

Le collecteur d'exploitation comprend en outre un deuxième canal d'évacuation de fluide stocké dans les réservoirs, ménagé dans le corps du collecteur d'exploitation et destiné à mettre en communication fluidique l'intérieur des réservoirs et l'extérieur, le deuxième canal d'évacuation de fluide stocké dans les réservoirs comprenant un premier dispositif de décompression thermo-commandé destiné à permettre ou empêcher la communication fluidique entre l'intérieur des réservoirs et l'extérieur. La présence du premier dispositif de décompression thermo-commandé assure la sécurité des réservoirs, en permettant une évacuation vers l'extérieur du fluide présent dans ceux-ci en cas de risque d'une surpression du fluide à l'intérieur des réservoirs, par exemple en cas d'incendie. Un tel dispositif est aussi appelé soupape de sécurité contre la surpression ou TPRD (pour son nom anglais « Thermal and Pressure Relief Device »). Le fait que le dispositif de décompression thermo-commandé soit intégré dans le deuxième canal d'évacuation de fluide stocké dans les réservoirs, c'est-à-dire intégré dans le corps du collecteur d'exploitation, permet d'intégrer sa fonction de sécurité directement dans le collecteur d'exploitation, ce qui facilite l'installation du collecteur d'exploitation et permet de réduire encore l'encombrement spatial du collecteur d'exploitation.

De préférence, le collecteur d'exploitation comprend en outre un troisième canal d'évacuation de fluide stocké dans les réservoirs, ménagé dans le corps du collecteur d'exploitation et destiné à mettre en communication fluidique l'intérieur des réservoirs et l'extérieur, le troisième canal d'évacuation de fluide stocké dans les réservoirs comprenant un deuxième dispositif de décompression thermo-commandé, destiné à permettre ou empêcher la communication fluidique entre l'intérieur des réservoirs et l'extérieur. On améliore ainsi encore la sécurité de l'ensemble comprenant le collecteur d'exploitation. En effet, en utilisant deux dispositifs de décompression thermo-commandés plutôt qu'un seul, la détection de phénomènes susceptibles d'engendrer une surpression de fluide à l'intérieur des réservoirs, typiquement la détection de la présence d'un incendie à proximité des réservoirs, est facilitée et accélérée puisqu'une plus grande surface spatiale est couverte par les deux dispositifs de décompression thermo-commandés par rapport à un dispositif de décompression thermo-commandé seul.

Le collecteur d'exploitation comprend en outre un capteur de température logé à l'intérieur du corps du collecteur d'exploitation et destiné à mesurer une température du fluide présent dans le collecteur d'exploitation. La fonction de mesure de température du fluide est donc intégrée dans le collecteur d'exploitation, facilitant ainsi son utilisation et réduisant l'encombrement spatial de l'ensemble comprenant le collecteur d'exploitation. En outre, ce mode de réalisation est particulièrement avantageux en ce qu'un capteur de température commun peut être suffisant pour tout le collecteur d'exploitation et les réservoirs auxquels le collecteur d'exploitation est associé, alors que dans l'art antérieur plusieurs capteurs de température sont utilisés et sont fixés sur plusieurs réservoirs, voire un capteur de température est utilisé par réservoir. En outre, le capteur de température étant présent dans le collecteur d'exploitation, il fournit une mesure précise de la température du fluide présent dans celui-ci et donc de la température du fluide distribué, ce qui peut être avantageux car les réservoirs sont généralement mieux isolés thermiquement que le collecteur d'exploitation, qui a un transfert thermique plus important. Au contraire, dans l'art antérieur, les capteurs de température utilisés sont montés sur les réservoirs, par exemple au niveau de leurs embouts, et donnent donc une mesure de la température du fluide stocké et ne sont pas aptes à fournir une mesure précise de la température du fluide distribué. De préférence, on prévoit au moins un autre capteur de température dans un réservoir ou au voisinage direct, mais pas sur chaque réservoir, car tous les réservoirs étant connectés entre eux, seule la mesure sur un réservoir ou sur quelques réservoirs peut être suffisante. On comprend donc que le nombre de capteurs de température est réduit, ce qui permet de réduire le coût de fabrication et de maintenance, le poids et l'encombrement spatial du collecteur d'exploitation.

Le collecteur d'exploitation comprend en outre un capteur de pression logé à l'intérieur du corps du collecteur d'exploitation et destiné à mesurer une pression à l'intérieur du collecteur d'exploitation. La fonction de mesure de la pression du fluide est donc intégrée dans le collecteur d'exploitation, facilitant ainsi son utilisation et réduisant l'encombrement de l'ensemble comprenant le collecteur d'exploitation et les réservoirs. En outre, un seul capteur de pression est suffisant pour tout le collecteur et les réservoirs auquel le collecteur est associé alors que dans l'art antérieur plusieurs capteurs de pression fixés aux réservoirs sont utilisés. Le capteur de pression étant présent dans le collecteur d'exploitation, il fournit une mesure précise de la pression du fluide présent dans celui-ci et donc de la pression du fluide distribué. Au contraire, dans l'art antérieur, les capteurs de pression utilisés sont montés sur les réservoirs, par exemple au niveau de leurs embouts, et donnent une mesure de la pression du fluide stocké, sans être aptes à fournir une mesure précise de la pression du fluide distribué. On comprend également que le nombre de capteurs de pression est réduit, ce qui permet de réduire le coût de fabrication et de maintenance, le poids et l'encombrement spatial du collecteur d'exploitation.

Le collecteur d'exploitation comprend en outre au moins un filtre à particules situé en amont ou en aval de la vanne manuelle. La fonction de filtration des particules présentes dans le fluide est donc intégrée dans le collecteur d'exploitation, facilitant ainsi son utilisation et réduisant l'encombrement spatial de l'ensemble comprenant le collecteur d'exploitation et les réservoirs. En outre, la fonction de filtration étant centralisée dans le collecteur d'exploitation, il n'est pas nécessaire de prévoir un filtre pour chaque réservoir. On réduit donc le nombre de filtres utilisés, ce qui est économique et permet de diminuer le poids du collecteur d'exploitation. Le filtre peut être situé en amont ou en aval de la vanne manuelle. La position amont ou aval est définie par rapport à un sens de circulation du fluide dans le collecteur d'exploitation. Par exemple, si le filtre est positionné en amont de la vanne manuelle lorsque le fluide circule dans le canal de remplissage selon le premier sens en direction des réservoirs, il sera considéré comme positionné en aval de la vanne manuelle lorsque le fluide circule dans le canal de distribution selon le deuxième sens, opposé au premier sens. Inversement, si le filtre est positionné en aval de la vanne manuelle lorsque le fluide circule dans le canal de remplissage selon le premier sens en direction des réservoirs, il sera considéré comme positionné en amont de la vanne manuelle lorsque le fluide circule dans le canal de distribution selon le deuxième sens, opposé au premier sens. Selon un mode de réalisation particulier, le collecteur d'exploitation comprend deux filtres à particules. Par exemple, le premier filtre est positionné en amont de la vanne manuelle lorsque le fluide circule dans le collecteur d'exploitation selon le premier sens, en direction des réservoirs, et le deuxième filtre est positionné en amont de la vanne manuelle lorsque le fluide circule dans le collecteur d'exploitation selon le deuxième sens, opposé au premier sens.

Le canal de distribution de fluide stocké dans les réservoirs comprend un orifice de distribution débouchant dans une région d'extrémité du corps du collecteur d'exploitation, le canal de remplissage comprenant un orifice d'alimentation, distinct de l'orifice de distribution, débouchant dans la même région d'extrémité du collecteur d'exploitation que l'orifice de distribution. La compacité du collecteur d'exploitation est encore améliorée puisqu'il est possible de regrouper les conduits destinés à être raccordés fluidiquement respectivement avec l'orifice de distribution et l'orifice d'alimentation dans une même région restreinte. On comprend en outre que l'installation du collecteur d'exploitation est par la même occasion facilitée. Selon un mode de réalisation, la région d'extrémité du corps du collecteur d'exploitation comporte une face d'extrémité du corps et une face marginale périphérique du corps, la face marginale périphérique du corps s'étendant depuis la face d'extrémité du corps vers un premier des orifices de communication. Le premier des orifices de communication correspond à l'orifice de communication qui est le plus proche spatialement de la face d'extrémité du corps. Dans un mode de réalisation préféré, le corps est allongé le long de son axe longitudinal principal entre deux extrémités axiales, la région d'extrémité correspondant à une des deux extrémités axiales du corps.

Le canal de distribution comprend une vanne à limitation de débit disposée entre l'électrovanne et la vanne manuelle. La fonction de limitation de débit de distribution du fluide est donc intégrée dans le collecteur d'exploitation, facilitant ainsi l'utilisation du collecteur d'exploitation et réduisant l'encombrement de l'ensemble comprenant le collecteur d'exploitation. Une vanne à limitation de débit est aussi appelée soupape à limitation de débit ou soupape formant limiteur de débit.

Le corps du collecteur d'exploitation est venu de matière et réalisé dans un matériau apte à être utilisé pour la circulation de gaz sous pression, tout particulièrement un matériau certifié pour une application dans l'hydrogène, par exemple un matériau en aluminium ou en inox. On obtient ainsi un collecteur d'exploitation simple à fabriquer, compact et robuste. On remarque notamment que les organes fonctionnels du collecteur d'exploitation tels que la vanne manuelle, l'électrovanne, les premier et deuxième clapets anti-retour ou les capteurs de température ou de pression peuvent être facilement intégrés dans le corps du collecteur de manière particulièrement compacte avec, par exemple, peu ou aucune région formant saillie en dehors d'une surface d'enveloppe délimitée par le corps du collecteur d'exploitation. Selon un mode de réalisation particulier, le corps du collecteur d'exploitation est allongé et a une forme de profilé creux réalisé en métal tel qu'en aluminium ou en inox, qui sont des matériaux simples à utiliser et résistants. Bien entendu, d'autres métaux aptes à être utilisés pour la circulation de gaz sous pression peuvent être utilisés.

L'invention a également pour objet un ensemble de stockage et de distribution de fluide sous pression pour véhicule, comprenant un collecteur d'exploitation tel que décrit précédemment. De préférence, l'ensemble comprend une pluralité de réservoirs de fluide sous pression destinés à coopérer avec le collecteur d'exploitation afin de réaliser le stockage et la distribution de fluide sous pression.

L'invention a également pour objet un véhicule, de préférence automobile, comprenant un ensemble de stockage et de distribution de fluide sous pression tel que décrit précédemment. De préférence, le fluide sous pression est un gaz sous pression, par exemple du dihydrogène. Ce gaz sous pression peut, par exemple, être avantageusement utilisé en tant que combustible dans une pile à combustible afin de générer l'électricité nécessaire au fonctionnement d'un moteur électrique du véhicule.

L'invention a également pour objet un procédé de distribution de fluide sous pression pour véhicule au moyen d'un collecteur d'exploitation tel que décrit précédemment, comprenant les étapes suivantes :
a) la vanne manuelle étant ouverte, ouverture de l'électrovanne, et
b) distribution de fluide depuis les réservoirs vers un organe de consommation du fluide via le canal de distribution.

Ce procédé permet d'alimenter en fluide l'organe de consommation du fluide de manière simple. Par exemple, le fluide est un gaz sous pression tel que du dihydrogène et l'organe de consommation du fluide est une pile à combustible.

L'invention a également pour objet un procédé de remplissage de réservoirs de fluide sous pression au moyen d'un collecteur d'exploitation tel que décrit précédemment, comprenant les étapes suivantes :
a) la vanne manuelle étant ouverte, fermeture de l'électrovanne, et
b) alimentation des réservoirs en fluide depuis une source d'alimentation en ce fluide et via le canal de remplissage.

Ce procédé permet de remplir de manière simple les réservoirs à partir d'une source d'alimentation en fluide.

Enfin, l'invention a également pour objet un procédé d'évacuation de fluide stocké dans des réservoirs de fluide sous pression au moyen d'un collecteur d'exploitation tel que décrit précédemment, comprenant les étapes suivantes :
a) fermeture de la vanne manuelle, et
b) ouverture de la vanne manuelle d'évacuation.

Il est ainsi possible de réaliser simplement l'évacuation du fluide présent dans le collecteur d'exploitation et les réservoirs afin, par exemple, de réaliser une opération de maintenance.

### Brève description des figures

L'invention sera mieux comprise à la lecture de la description qui va suivre donnée uniquement à titre d'exemple non limitatif et faite en se référant aux dessins annexés dans lesquels :
[Fig.1] est une représentation schématique d'un véhicule comprenant un ensemble de stockage et de distribution de fluide sous pression comprenant un collecteur d'exploitation selon l'invention ;
[Fig.2] est vue de face d'une partie de l'ensemble de stockage et de distribution de fluide sous pression de la [Fig.1] ;
[Fig.3] est une représentation schématique de l'ensemble de stockage et de distributions de fluide sous pression des figures 1 et 2 ;
[Fig.4A] est une vue du côté gauche, par référence à la [Fig.2], d'une partie de l'ensemble de stockage et de distribution de fluide de la [Fig.2] ;
[Fig.4B] est une vue du côté droit, par référence à la [Fig.2], de l'ensemble de stockage et de distribution de fluide de la [Fig.2] ;
[Fig.4C] est une vue de de dessous de l'ensemble de stockage et de distribution de fluide de la [Fig.2] ;
[Fig.4D] est une vue de dessus de l'ensemble de stockage et de distribution de fluide de la [Fig.2] ;
[Fig.4E] est une vue en coupe selon le plan de coupe A-A de la [Fig.2] ;
[Fig.4F] est une vue en coupe selon le plan de coupe B-B de la [Fig.4E] ; et
[Fig.5] est une vue en perspective d'une partie d'un ensemble de stockage et de distribution de fluide sous pression de l'art antérieur.

### Description détaillée

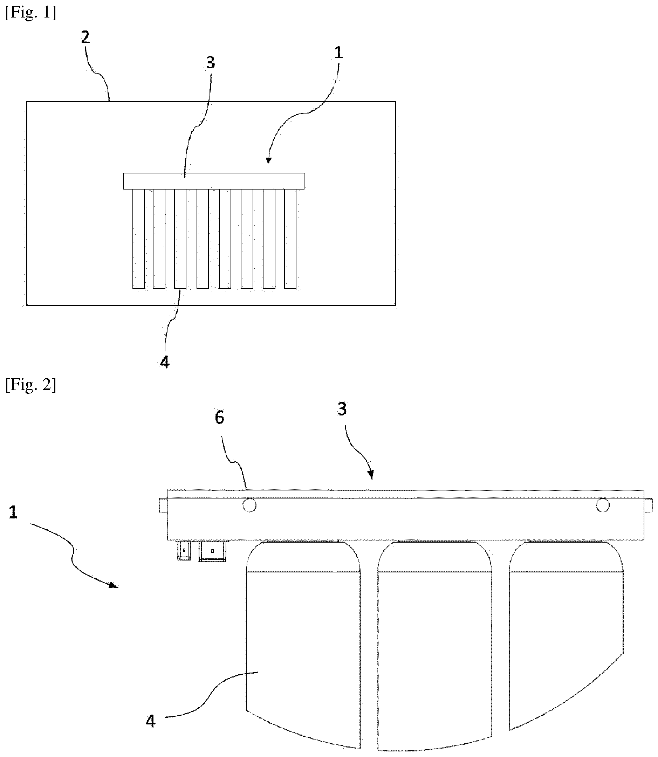

On a représenté sur les figures 1 à 4F un ensemble 1 de stockage et de distribution de fluide sous pression monté sur un véhicule 2 automobile et comprenant un collecteur 3 d'exploitation selon l'invention (également appelé par sa dénomination en anglais, « manifold ») ainsi qu'une pluralité de réservoirs 4 de fluide sous pression.

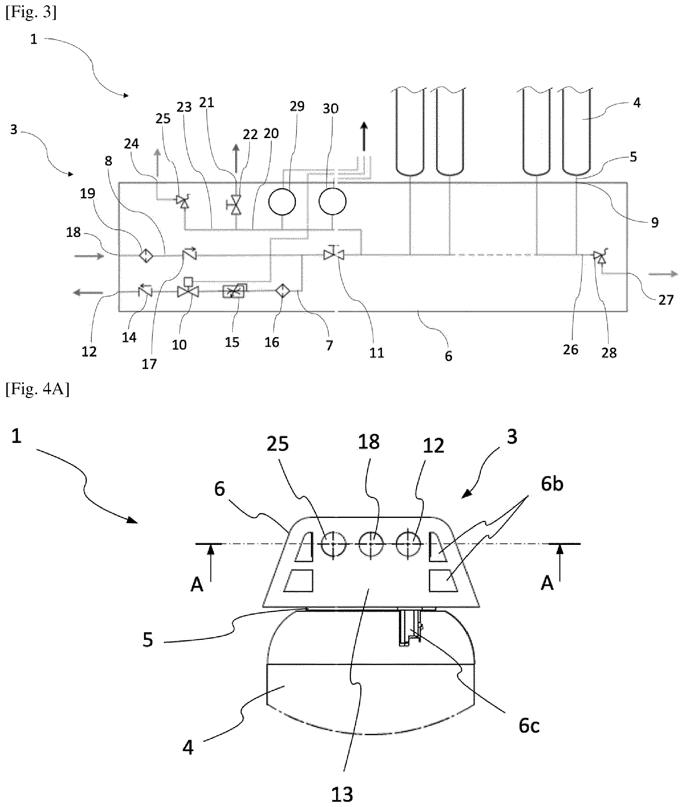

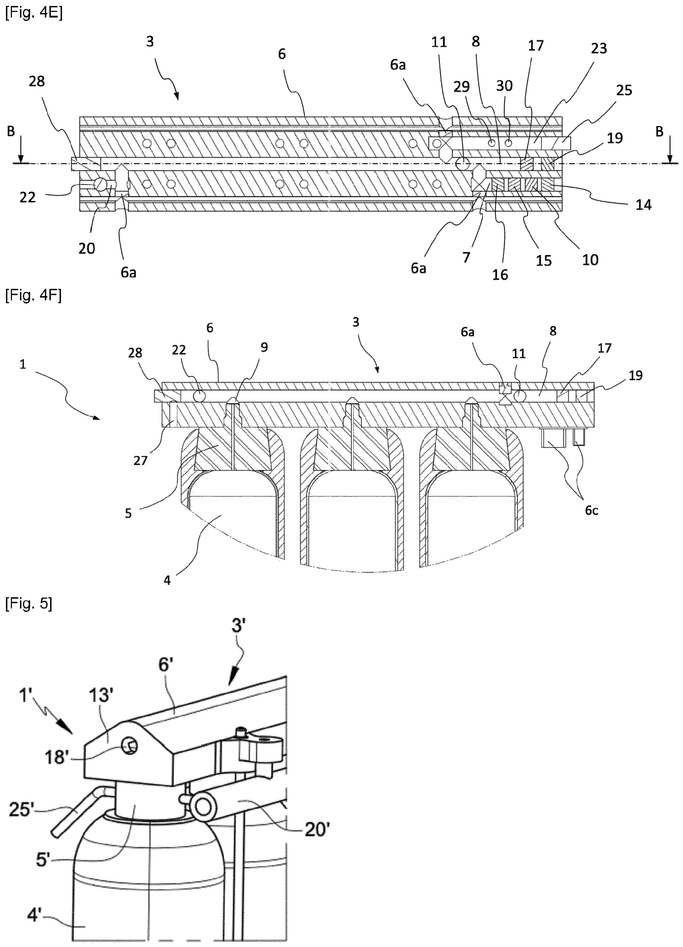

Dans le cas présent, le fluide destiné à être stocké et distribué par l'ensemble 1 de stockage et de distribution de fluide sous pression est un gaz, par exemple du dihydrogène sous pression. Les réservoirs 4 de fluide sous pression sont donc des réservoirs 4 apte à contenir du dihydrogène sous pression à une pression de stockage de 350 bar, voire de 700 bar, à température ambiante. Les réservoirs 4 de fluide sous pression sont solidarisés entre eux par une structure porteuse (non représentée) et par le collecteur 3 d'exploitation. Dans le présent mode de réalisation, les réservoirs 4 sont identiques entre eux. Chaque réservoir 4 a une forme sensiblement cylindrique allongé et comprend une enveloppe interne également appelée liner (non représentée). Le liner est par exemple réalisé en matériau polymère, et comporte au moins une ouverture sous forme de col. Chaque réservoir 4 comprend en outre un embout 5 surmontant le col et destiné à coopérer avec le collecteur 3 d'exploitation pour permettre la fixation du collecteur 3 d'exploitation sur les réservoirs 4 ([Fig.4F]). Selon d'autres modes de réalisation, au moins un des réservoirs est différent des autres. Dans le présent mode de réalisation, les réservoirs 4 s'étendent longitudinalement, sont disposés parallèlement les uns aux autres et sont en outre alignés (figures 1 et 2). Le nombre de réservoirs 4 varie selon les modes de réalisation, notamment en fonction de la capacité de stockage de gaz souhaitée et de l'espace disponible dans le véhicule 2 automobile. Ainsi, l'ensemble 1 comprend au moins trois réservoirs, de préférence au moins cinq voire au moins dix réservoirs, dans l'exemple plus précisément, treize réservoirs (seulement trois réservoirs 4 sont représentés sur les figures 2 et 4A à 4F et quatre réservoirs 4 sont représentés sur la [Fig.3]).

Le collecteur 3 d'exploitation a une forme générale allongée et comprend notamment un corps 6, un canal 7 de distribution, un canal 8 de remplissage et des organes fonctionnels.

Le corps 6 du collecteur 3 d'exploitation a une forme générale allongée s'étendant entre deux extrémités longitudinales, et est venu de matière (figures 2 et 4E). Il est réalisé dans un matériau apte à être utilisé pour la circulation de gaz sous pression, notamment de dihydrogène sous pression, par exemple un matériau en aluminium ou en inox. On comprend que, selon des variantes de réalisation, d'autres matériaux que l'aluminium ou l'inox peuvent être utilisés, notamment des matériaux métalliques. Le corps 6 présente une pluralité d'orifices 9 de communication, chaque orifice 9 de communication étant configuré pour être en communication fluidique avec un réservoir 4 (figures 3 et 4F). Par exemple, les réservoirs 4 sont vissés, encliquetés ou fixés par serrage, par leur embout 5 sur les orifices 9 de communication du collecteur 3 d'exploitation afin de mettre en communication fluidique l'intérieur du réservoir 4 et l'orifice 9 de communication sur lequel il est fixé.

Le canal 7 de distribution du fluide stocké dans les réservoirs 4 est ménagé dans le corps 6 du collecteur 3 d'exploitation (figures 3 et 4E). Le canal 7 de distribution est configuré pour être en communication fluidique avec les réservoirs 4 via une électrovanne 10 et une vanne 11 manuelle. Le canal 7 de distribution comprend un orifice 12 de distribution qui débouche dans une région d'extrémité du corps 6 du collecteur 3 d'exploitation, plus particulièrement dans une face 13 d'extrémité du corps 6 du collecteur 3 d'exploitation ([Fig.4A]). Cet orifice 12 de distribution est destiné à être raccordé fluidiquement à un conduit d'alimentation en fluide d'un organe de consommation du fluide (non représenté).

L'électrovanne 10 est une vanne commandée électriquement qui empêche ou permet sélectivement le passage de fluide dans le canal 7 de distribution. Ainsi, lorsqu'elle est fermée, l'électrovanne 10 empêche la circulation de fluide dans le canal 7 de distribution, et donc empêche la distribution de fluide à l'organe de consommation du fluide. Lorsqu'elle est ouverte, l'électrovanne 10 permet le passage de fluide dans le canal 7 de distribution, et donc permet la distribution du fluide à l'organe de consommation du fluide. La vanne 11 manuelle remplit la même fonction, à savoir empêcher ou permettre le passage de fluide dans le canal 7 de distribution, à la différence qu'elle n'est pas commandée électriquement mais manuellement, par exemple par un opérateur. Ainsi, le fluide peut circuler dans le canal 7 de distribution depuis les réservoirs 4 et vers l'organe de consommation de ce fluide uniquement lorsque l'électrovanne 10 et la vanne 11 manuelle sont toutes les deux ouvertes. Dans le cas présent, le fluide est un gaz, du dihydrogène, et le dispositif de consommation de ce fluide est une pile à combustible apte à utiliser le dihydrogène en tant que combustible afin de produire de l'électricité. Selon d'autres modes de réalisation, le fluide peut être de nature différente, par exemple le fluide peut être un autre gaz que du dihydrogène.

Le canal 7 de distribution comprend également un premier clapet 14 anti-retour destiné à empêcher un passage de fluide dans un premier sens dans le canal 7 de distribution en direction des réservoirs 4 et à permettre un passage de fluide dans un deuxième sens dans le canal 7 de distribution, opposé au premier sens.

Le canal 7 de distribution comprend en outre une vanne 15 à limitation de débit disposée entre l'électrovanne 10 et la vanne 11 manuelle (figures 3 et 4E). La vanne 15 à limitation de débit permet de réguler le débit de distribution du fluide vers l'organe de consommation du fluide.

Le canal 7 de distribution comprend un premier filtre 16 à particules disposé entre la vanne 11 manuelle et la vanne 15 à limitation de débit (figures 3 et 4E). Autrement dit, le premier filtre 16 à particules est disposé en aval de la vanne 11 manuelle lorsque le fluide circule dans le canal 7 de distribution selon le deuxième sens, allant des réservoirs 4 vers l'orifice 12 de distribution du canal 7 de distribution. Les caractéristiques du premier filtre 16 sont choisies en fonction des particules à filtrer et du niveau de pureté que doit avoir le fluide distribué par l'ensemble 1 de stockage et de distribution de fluide à l'organe de consommation de ce fluide. Selon une variante de réalisation (non représentée), le premier filtre 16 à particules est disposé entre la vanne 11 manuelle et les réservoirs 4. Autrement dit, selon cette variante de réalisation, le premier filtre 16 à particules est disposé en amont de la vanne 11 manuelle lorsque le fluide circule dans le canal 7 de distribution selon le deuxième sens, allant des réservoirs 4 vers l'orifice 12 de distribution du canal 7 de distribution.

Le canal 8 de remplissage des réservoirs 4 est lui aussi ménagé dans le corps 6 du collecteur 3 d'exploitation (figures 3 et 4E). Le canal 8 de remplissage des réservoirs 4 est configuré pour être en communication fluidique avec les réservoirs 4. Il comprend un deuxième clapet 17 anti-retour destiné à permettre un passage de fluide dans le canal 8 de remplissage des réservoirs 4 dans le premier sens en direction des réservoirs 4 et à empêcher un passage de fluide dans le canal 8 de remplissage des réservoirs dans un sens opposé au premier sens.

La vanne 11 manuelle utilisée dans le canal 7 de distribution est également utilisée pour assurer une communication fluidique entre le canal 8 de remplissage des réservoirs 4 et les réservoirs 4 (figures 3 et 4E). L'utilisation d'une seule vanne 11 manuelle à la fois pour le canal 7 de distribution et le canal 8 de remplissage des réservoirs 4 est avantageuse en ce qu'elle permet de réduire le nombre de vannes 11 manuelles utilisées, ce qui est économique et réduit l'encombrement spatial du collecteur 3 d'exploitation. On remarque en outre que le fait que cette vanne 11 manuelle soit présente dans le collecteur 3 d'exploitation plutôt que, par exemple, dans les embouts 5 des réservoirs, permet de centraliser la fonction de cette vanne 11 manuelle dans le collecteur 3 d'exploitation et donc de faciliter l'utilisation de l'ensemble 1 de stockage et de distribution du fluide.

Le canal 8 de remplissage des réservoirs 4 comprend un orifice 18 d'alimentation débouchant dans la même région d'extrémité du collecteur 3 d'exploitation que celle dans laquelle débouche l'orifice 12 de distribution du canal 7 de distribution ([Fig.4A] ). Plus particulièrement, l'orifice 18 d'alimentation débouche dans la même face 13 d'extrémité du collecteur 3 d'exploitation que celle dans laquelle débouche l'orifice 12 de distribution. Ainsi, l'installation du collecteur 3 d'exploitation est facilitée et il est possible d'optimiser le placement des conduits pour le passage de fluide dans le véhicule 2, diminuant ainsi l'encombrement spatial du collecteur 3 d'exploitation. L'orifice 18 d'alimentation est configuré pour être raccordé fluidiquement à une source d'alimentation en fluide. Dans le cas présent, la source d'alimentation en fluide est une source de dihydrogène sous pression.

Le canal 8 de remplissage des réservoirs 4 comprend un deuxième filtre 19 à particules. Dans le cas présent, le deuxième filtre 19 à particules est disposé entre l'orifice 18 d'alimentation et le deuxième clapet 17 anti-retour (figures 3 et 4E). Selon des variantes de réalisation (non représentées), le deuxième filtre 19 à particules peut être disposé ailleurs dans le canal 8 de remplissage des réservoirs 4, par exemple entre le deuxième clapet 17 anti-retour et la vanne 11 manuelle. Le deuxième filtre 19 à particules permet d'éliminer une partie des impuretés pouvant être présentes dans le fluide lorsque celui-ci est introduit dans le collecteur 3 d'exploitation.

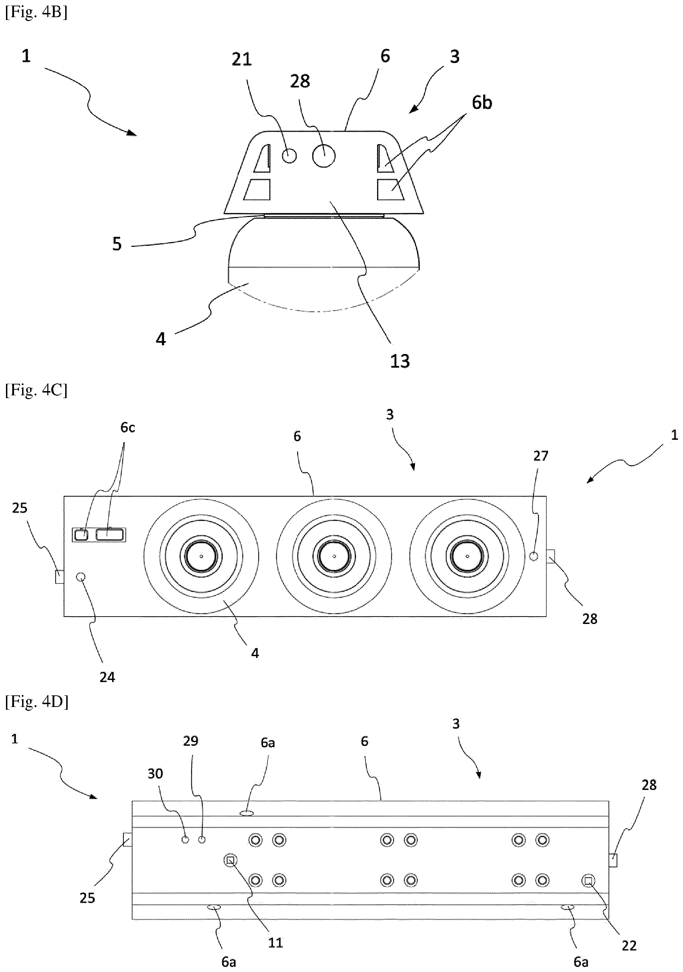

Le collecteur 3 d'exploitation comprend en outre un premier canal 20 d'évacuation de fluide stocké dans les réservoirs 4 (figures 3 et 4E). Le premier canal 20 d'évacuation de fluide stocké dans les réservoirs est ménagé dans le corps 6 du collecteur 3 d'exploitation et est destiné à mettre en communication fluidique l'intérieur des réservoirs 4 et l'extérieur. Le premier canal 20 d'évacuation de fluide stocké dans le réservoir présente un premier orifice 21 d'évacuation qui débouche à la surface du corps 6 du collecteur 3 d'exploitation. Dans le cas présent, le premier orifice 21 d'évacuation débouche dans la face 13 d'extrémité du corps 6 du collecteur 3 d'exploitation qui est opposée à la face 13 d'extrémité dans laquelle débouchent l'orifice 12 de distribution et l'orifice 18 d'alimentation ([Fig.4B]). Selon d'autres modes de réalisation (non représentés), on peut prévoir que le premier orifice 21 d'évacuation débouche ailleurs, par exemple dans la face 13 d'extrémité dans laquelle débouche l'orifice 12 de distribution et l'orifice 18 d'alimentation. Le premier canal 20 d'évacuation de fluide stocké dans les réservoirs 4 comprend une vanne 22 manuelle d'évacuation destinée à empêcher ou permettre la communication fluidique entre l'intérieur des réservoirs 4 et l'extérieur. De cette façon, si un opérateur souhaite effectuer une opération de maintenance sur l'ensemble 2 de stockage et de distribution de fluide nécessitant l'absence de fluide, il peut aisément évacuer le fluide en ouvrant la vanne 22 manuelle d'évacuation afin que le fluide, ici le dihydrogène, présent dans les réservoirs 4 et dans le collecteur 3 d'exploitation soit évacué vers l'extérieur via le premier canal 20 d'évacuation de fluide présent dans les réservoirs 4 et à travers le premier orifice 21 d'évacuation.

Le collecteur 3 d'exploitation comprend en outre un deuxième canal 23 d'évacuation de fluide stocké dans les réservoirs 4 (figures 3 et 4E). Le deuxième canal 23 d'évacuation de fluide stocké dans les réservoirs 4 est ménagé dans le corps 6 du collecteur 3 d'exploitation et est destiné à mettre en communication fluidique l'intérieur des réservoirs 4 et l'extérieur. Le deuxième canal 23 d'évacuation de fluide stocké dans les réservoirs 4 présente un deuxième orifice 24 d'évacuation qui débouche à la surface du corps 6 du collecteur 3 d'exploitation. Le deuxième canal 23 d'évacuation de fluide stocké dans les réservoirs 4 comprend un premier dispositif 25 de décompression thermo-commandé, aussi appelé par son acronyme anglais TPRD. Le premier dispositif 25 de décompression thermo-commandé est destiné à permettre ou empêcher la communication fluidique entre l'intérieur des réservoirs 4 et l'extérieur. De manière classique, le dispositif 25 de décompression thermo-commandé empêche la communication fluidique entre l'intérieur des réservoirs 4 et l'extérieur via le deuxième canal 23 d'évacuation lorsqu'aucune source anormale de chaleur est présente, typiquement en l'absence d'incendie. Si un incendie survient, le dispositif 25 de décompression thermo-commandé est modifié structurellement afin de permettre la communication fluidique entre l'intérieur des réservoirs 4 et l'extérieur via le deuxième canal 23 d'évacuation. Cette communication permet d'évacuer le fluide présent dans les réservoirs 4 et le collecteur 3 d'exploitation vers l'extérieur via le deuxième canal 23 d'évacuation et à travers le deuxième orifice 24 d'évacuation. Un tel dispositif 25 de décompression thermo-commandé permet d'améliorer la sécurité de l'ensemble 1 de stockage et de distribution de fluide en évitant la survenue d'une surpression à l'intérieur des réservoirs 4 susceptible de les faire exploser. Dans le cas présent, le deuxième orifice 24 d'évacuation débouche dans une face inférieure du corps 6 du collecteur 3 d'exploitation, au niveau de l'extrémité axiale du corps 6 qui comprend la face 13 d'extrémité dans laquelle débouchent l'orifice 12 de distribution et l'orifice 18 d'alimentation ([Fig.4C]). Selon d'autres modes de réalisation (non représentés), on peut prévoir que le deuxième orifice 24 d'évacuation débouche ailleurs, par exemple au niveau de la face 13 d'extrémité du corps 6 du collecteur 3 d'exploitation dans laquelle débouchent l'orifice 12 de distribution et l'orifice 18 d'alimentation.

Dans le cas présent, le collecteur 3 d'exploitation comprend en outre un troisième canal 26 d'évacuation de fluide stocké dans les réservoirs 4. Le troisième canal 26 d'évacuation de fluide stocké dans les réservoirs 4 est ménagé dans le corps 6 du collecteur 3 d'exploitation et est destiné à mettre en communication fluidique l'intérieur des réservoirs 4 et l'extérieur. Le troisième canal 26 d'évacuation de fluide stocké dans les réservoirs 4 présente un troisième orifice 27 d'évacuation qui débouche à la surface du corps 6 du collecteur 3 d'exploitation. Le troisième canal 26 d'évacuation de fluide stocké dans les réservoirs 4 comprend un deuxième dispositif 28 de décompression thermo-commandé, aussi appelé par son acronyme TPRD. Comme le premier dispositif 25 de décompression thermo-commandé, le deuxième dispositif 28 de décompression thermo-commandé est destiné à permettre ou empêcher la communication fluidique entre l'intérieur des réservoirs 4 et l'extérieur. La présence de ce deuxième dispositif 28 de décompression thermo-commandé permet d'augmenter encore la sécurité de l'ensemble 1 de stockage et de distribution de fluide sous pression en augmentant la surface de détection d'un éventuel incendie. Dans le cas présent, le troisième orifice 27 d'évacuation débouche dans la face inférieure du corps 6 du collecteur 3 d'exploitation, au niveau de l'extrémité axiale qui est opposée à celle dans laquelle débouche le deuxième orifice 24 d'évacuation ([Fig.4C]). Il s'agit donc de l'extrémité axiale comprenant la face 13 d'extrémité dans laquelle débouche le premier orifice 21 d'évacuation. Selon d'autres modes de réalisation (non représentés), on peut prévoir que le troisième orifice 27 d'évacuation débouche ailleurs, par exemple dans la face 13 d'extrémité dans laquelle débouche le premier orifice 21 d'évacuation.

La [Fig.3] étant schématique, elle ne représente pas nécessairement les emplacements des différents organes fonctionnels les uns par rapport aux autres de manière exacte, sauf indication contraire, par souci de simplification. On remarque notamment que le premier orifice 21 d'évacuation, le deuxième orifice 24 d'évacuation et le troisième orifice 27 d'évacuation sont placés les uns par rapport aux autres dans des positions qui ne correspondent pas à celles représentées sur la [Fig.4E].

Le collecteur 3 d'exploitation comprend en outre des bouchons 6a configurés pour obturer de manière étanche au fluide destiné à circuler dans le collecteur 3 d'exploitation des orifices qui ont été ménagés dans le corps 6 du collecteur 3 d'exploitation lors de son usinage, notamment afin de créer les différents canaux ménagés dans celui-ci (figures 4D et 4E). On évite ainsi avantageusement et de manière simple que le fluide circulant dans le collecteur 3 d'exploitation ne s'échappe vers l'extérieur.

Le collecteur 3 d'exploitation comprend en outre un capteur 29 de température logé à l'intérieur du corps 6 du collecteur 3 d'exploitation et destiné à mesurer une température du fluide présent dans le collecteur 3 d'exploitation. Ce capteur 29 de température permet ainsi de mesurer la température du fluide distribué, c'est-à-dire dans le présent mode de réalisation la température du dihydrogène fourni à la pile à combustible.

Le collecteur 3 d'exploitation comprend également un capteur 30 de pression logé à l'intérieur du corps 6 du collecteur d'exploitation et destiné à mesurer une pression à l'intérieur du collecteur 3 d'exploitation. On comprend qu'il est avantageux d'utiliser un unique capteur 30 de pression afin de mesurer la pression du fluide dans le collecteur plutôt que d'utiliser plusieurs capteurs de pression pour mesurer la pression du fluide dans les réservoirs.

Les mesures effectuées par le capteur 29 de température et le capteur 30 de pression sont transmises à une unité de commande électronique (non représenté) apte à traiter ces informations et à commander, si besoin, des actions visant à corriger la température et/ou la pression si ces paramètres ne sont pas compris dans une plage de valeur prédéterminée. Le capteur de température 29, le capteur 30 de pression et l'électrovanne 10 sont reliés à l'unité de commande électronique via un connecteur 6c électronique porté par le corps 6 du collecteur 3 d'exploitation (figures 4A, 4C et 4F). Dans le mode de réalisation présenté, le connecteur 6c électronique est porté par la face inférieure du corps 6 du collecteur 3 d'exploitation.

Des évidements 6b ont été réalisés dans le corps 6 du collecteur 3 d'exploitation (figures 4A et 4B). Dans le cas présent, chaque évidement 6b traverse le corps 6 du collecteur 3 d'exploitation de part en part axialement et débouche au niveau des deux faces 13 d'extrémité du corps 6. Ces évidements 6b permettent avantageusement de réduire le poids du collecteur 3 d'exploitation.

On remarque que le collecteur 3 d'exploitation selon l'invention est particulièrement avantageux en ce qu'il intègre un grand nombre d'organes fonctionnels, tels que la vanne 11 manuelle, l'électrovanne 10, la vanne 22 manuelle d'évacuation, le capteur 29 de température, le capteur 30 de pression, le premier dispositif 25 de décompression thermo-commandé ou encore le deuxième dispositif 28 de décompression thermo-commandé. Ces fonctions sont donc centralisées dans le collecteur 3 d'exploitation, ce qui permet d'optimiser le nombre d'organes fonctionnels utilisés et de simplifier l'installation et l'utilisation du collecteur 3 d'exploitation. En particulier, l'utilisation d'une seule vanne 11 manuelle pour le canal 7 de distribution et le canal 8 de remplissage des réservoirs 4 est particulièrement avantageuse puisqu'elle permet l'économie d'une vanne manuelle et un gain de place et de poids. En outre, on remarque que, puisque les organes fonctionnels sont logés à l'intérieur du corps 6 du collecteur d'exploitation, l'aspect externe de celui-ci est particulièrement épuré, sans ou avec très peu d'organes fonctionnels formant des saillies hors de la surface enveloppe définie par le corps 6 du collecteur 3 d'exploitation. L'encombrement spatial du collecteur 3 d'exploitation est ainsi optimisé. Sur les figures, notamment sur la [Fig.4E], les organes fonctionnels sont représentés de manière schématique.

Les avantages de l'invention apparaissent tout particulièrement lorsqu'on compare un ensemble 1 de stockage et de distribution de fluide selon l'invention à un ensemble l' de stockage et de distribution de fluide de l'art antérieur tel que représenté à la [Fig.5]. Les éléments homologues à ceux de l'invention sont désignés sur la [Fig.5] représentant l'art antérieur par la même référence numérique à laquelle a été ajoutée une apostrophe « ' ».

L'ensemble l' de stockage et de distribution de fluide de l'art antérieur comprend un collecteur 3' d'exploitation comprenant un corps 6' de forme générale allongée entre deux extrémités axiales. Le collecteur 3' d'exploitation de l'art antérieur est fixé sur des réservoirs 4' de fluide sous pression via leur embouts 5'. Le corps 6' comprend un canal de remplissage (non représenté) des réservoirs 4' et un canal de distribution (non représenté) de fluide stocké dans les réservoirs 4'. Le canal de remplissage présente un orifice 18' d'alimentation débouchant dans une face 13' d'extrémité du corps 6' du collecteur 3' d'exploitation. Le canal de distribution présente un orifice de distribution (non représenté) débouchant dans une autre face d'extrémité du corps 6' du collecteur 3' d'exploitation qui est axialement opposée à la face 13' d'extrémité dans laquelle débouche l'orifice 18' d'alimentation. Le canal de distribution et le canal de remplissage comprennent chacun une vanne manuelle (non représentée) destinée à empêcher ou permettre la communication fluidique entre les réservoirs et ces canaux respectifs. On remarque ainsi qu'un nombre plus élevé de vannes manuelles est utilisé par rapport à la présente invention.

L'ensemble l' de stockage et de distribution de fluide de l'art antérieur comprend des organes fonctionnels qui forment des saillies à partir de la surface externe du corps 6' du collecteur 3' d'exploitation. En particulier, sont représentés sur la [Fig.5] un dispositif 25' de décompression thermo-commandé et un canal 20' d'évacuation de fluide stocké dans les réservoirs 4'. Ces organes fonctionnels ne sont donc pas présents dans le corps 6' du collecteur 3' d'exploitation et augmentent son encombrement spatial.

On décrit ci-après le fonctionnement d'un ensemble 1 de stockage et de distribution de fluide sous pression pour véhicule 2 selon l'invention.

Une première étape pour l'utilisation de l'ensemble 1 de stockage et de distribution de fluide consiste à remplir les réservoirs 4 en fluide sous pression, c'est-à-dire en dihydrogène sous pression dans le cas présent, en utilisant le collecteur 3 d'exploitation. Pour cela, les étapes suivantes sont réalisées :
- la vanne 11 manuelle étant ouverte, on ferme l'électrovanne 10 ou on s'assure que celle-ci est bien fermée. De cette façon, le fluide ne peut circuler que dans le canal 8 de remplissage des réservoirs 4 ; et
- on alimente les réservoirs 4 en fluide, ici en dihydrogène, depuis une source d'alimentation en fluide. Cette alimentation se fait via le canal 8 de remplissage à travers, dans l'ordre, l'orifice 18 d'alimentation, le deuxième filtre 19 à particules, le deuxième clapet 17 anti-retour, la vanne 11 manuelle, les orifices 9 de communication du collecteur 3 d'exploitation et, enfin, les embouts 5 des différents réservoirs 4. Lors de ce remplissage, le deuxième clapet 17 anti-retour empêche le reflux de fluide vers la source d'alimentation en fluide et l'électrovanne 10 fermée empêche la sortie du fluide hors du collecteur 3 d'exploitation, en direction du dispositif de consommation de fluide, correspondant ici à une pile à combustible.

Une fois que les réservoirs 4 ont été remplis, le fluide, ici le dihydrogène, est utilisé par le véhicule 2 automobile en tant que source d'énergie pour alimenter l'organe de consommation du fluide, ici la pile à combustible, afin de produire de l'électricité. Une deuxième étape de l'utilisation de l'ensemble 1 de stockage et de distribution de fluide consiste donc à distribuer le fluide stocké dans les réservoirs 4, ici le dihydrogène, à l'organe de consommation de ce fluide, ici la pile à combustible, au moyen du collecteur 3 d'exploitation. Pour cela, les étapes suivantes sont réalisées :
- la vanne 11 manuelle étant ouverte, on ouvre l'électrovanne 10. De cette façon, le fluide ne peut circuler que dans le canal 7 de distribution du fluide stocké dans les réservoirs 4 ; et
- on distribue le fluide, ici le dihydrogène, depuis les réservoirs 4 vers l'organe de consommation du fluide, ici la pile à combustible. Cette distribution est permise car l'électrovanne 10 et la vanne 11 manuelle sont ouvertes. Cette distribution se fait via le canal 7 de distribution à travers, dans l'ordre, les embouts 5 des réservoirs 4, les orifices 9 de communication du collecteur 3 d'exploitation, la vanne 11 manuelle, le premier filtre 16, la vanne 15 à limitation de débit, l'électrovanne 10, le premier clapet 14 anti-retour et l'orifice 12 de distribution. Lors de cette distribution, le premier clapet 14 anti-retour empêche le reflux de fluide en direction des réservoirs 4 et le deuxième clapet 17 anti-retour empêche la fuite de fluide via l'orifice 18 d'alimentation du canal 8 de remplissage des réservoirs 4.

Par ailleurs, au cours de la vie de l'ensemble 1 de stockage et de distribution de fluide, il est nécessaire de réaliser diverses opérations de maintenances sur celui-ci, et notamment sur le collecteur 3 d'exploitation. Pour plusieurs de ces opérations de maintenance, il est nécessaire que le collecteur 3 d'exploitation et les réservoirs 4 ne contiennent pas de fluide, c'est-à-dire dans le cas présent qu'ils ne contiennent pas du dihydrogène sous pression. Pour cela, il est nécessaire d'évacuer le fluide, notamment le fluide stocké dans les réservoirs, hors de ceux-ci et hors du collecteur 3 d'exploitation. Pour cela, les étapes suivantes sont réalisées :
- on ferme la vanne 11 manuelle. Il n'y a alors pas de risques que du fluide s'échappe via l'orifice 12 de distribution ou l'orifice 18 d'alimentation ; et
- on ouvre la vanne 22 manuelle d'évacuation. Le fluide étant sous pression dans les réservoirs 4 et le collecteur 3 d'exploitation, il s'échappe naturellement hors des réservoirs 4 et du collecteur 3 d'exploitation vers l'extérieur en passant par le premier canal 20 d'évacuation de fluide stocké dans les réservoirs 4 et le premier orifice 21 d'évacuation. On évacue ainsi de manière simple le fluide du collecteur 3 d'exploitation et des réservoirs 4 et l'opérateur peut réaliser les opérations de maintenance nécessaires.

L'invention n'est pas limitée aux modes de réalisation présentés et d'autres modes de réalisation apparaîtront clairement à l'homme du métier.

### Liste de références

1 : ensemble de stockage et de distribution de fluide sous pression pour véhicule
2 : véhicule automobile
3 : collecteur d'exploitation
4 : réservoir
5 : embout du réservoir
6 : corps du collecteur d'exploitation
6a : bouchon
6b : évidement
6c : connecteur électrique
7 : canal de distribution du fluide stocké dans les réservoirs
8 : canal de remplissage des réservoirs
9 : orifice de communication du collecteur d'exploitation
10 : électrovanne
11 : vanne manuelle
12 : orifice de distribution
13 : face d'extrémité du collecteur d'exploitation
14 : premier clapet anti-retour
15 : vanne à limitation de débit
16 : premier filtre
17 : deuxième clapet anti-retour
18 : orifice d'alimentation du canal de remplissage des réservoirs
19 : deuxième filtre à particules
20 : premier canal d'évacuation de fluide stocké dans les réservoirs
21 : premier orifice d'évacuation
22 : vanne manuelle d'évacuation
23 : deuxième canal d'évacuation de fluide stocké dans les réservoirs
24 : deuxième orifice d'évacuation
25 : premier dispositif de décompression thermo-commandé
26 : troisième canal d'évacuation de fluide stocké dans les réservoirs
27 : troisième orifice d'évacuation
28 : deuxième dispositif de décompression thermo-commandé
29 : capteur de température
30 : capteur de pression

## Revendications

1. Collecteur (3) d'exploitation pour un ensemble (1) de stockage et de distribution de fluide sous pression pour véhicule (2), l'ensemble comprenant une pluralité de réservoirs (4) pour fluide sous pression, le collecteur (3) d'exploitation comportant :
- un corps (6) présentant une pluralité d'orifices (9) de communication, chaque orifice (9) de communication étant configuré pour être en communication fluidique avec un réservoir (4),
- une électrovanne (10),
- une vanne (11) manuelle,
- un canal (7) de distribution de fluide stocké dans les réservoirs (4), le canal (7) de distribution de fluide étant ménagé dans le corps (6) et étant configuré pour être en communication fluidique avec les réservoirs (4) via l'électrovanne (10) et la vanne (11) manuelle,
- un canal (8) de remplissage des réservoirs (4), ménagé dans le corps (6) et configuré pour être en communication fluidique avec les réservoirs (4), le canal (8) de remplissage des réservoirs (4) comprenant un deuxième clapet (17) anti-retour destiné à permettre un passage de fluide dans un premier sens en direction des réservoirs (4) et à empêcher un passage de fluide dans un sens opposé,
**caractérisé en ce que** le canal (7) de distribution de fluide comprend un premier clapet (14) anti-retour destiné à empêcher un passage de fluide dans le premier sens en direction des réservoirs (4) et à permettre un passage de fluide dans un deuxième sens, opposé au premier sens, et **en ce que** la vanne (11) manuelle est également utilisée pour assurer une communication fluidique entre le canal (8) de remplissage des réservoirs (4) et les réservoirs (4).

2. Collecteur (3) d'exploitation selon la revendication précédente, comprenant en outre un premier canal (20) d'évacuation de fluide stocké dans les réservoirs (4), ménagé dans le corps (6) du collecteur (3) d'exploitation et destiné à mettre en communication fluidique l'intérieur des réservoirs (4) et l'extérieur, le premier canal (20) d'évacuation de fluide stocké dans les réservoirs comprenant une vanne (22) manuelle d'évacuation destinée à permettre ou empêcher la communication fluidique entre l'intérieur des réservoirs (4) et l'extérieur.

3. Collecteur (3) d'exploitation selon la revendication 1 ou 2, comprenant en outre un deuxième canal (23) d'évacuation de fluide stocké dans les réservoirs (4), ménagé dans le corps (6) du collecteur (3) d'exploitation et destiné à mettre en communication fluidique l'intérieur des réservoirs (4) et l'extérieur, le deuxième canal (23) d'évacuation de fluide stocké dans les réservoirs (4) comprenant un premier dispositif (25) de décompression thermo-commandé destiné à permettre ou empêcher la communication fluidique entre l'intérieur des réservoirs (4) et l'extérieur.

4. Collecteur (3) d'exploitation selon la revendication précédente, comprenant en outre un troisième canal (26) d'évacuation de fluide stocké dans les réservoirs (4), ménagé dans le corps (6) du collecteur (3) d'exploitation et destiné à mettre en communication fluidique l'intérieur des réservoirs (4) et l'extérieur, le troisième canal (26) d'évacuation de fluide stocké dans les réservoirs (4) comprenant un deuxième dispositif (28) de décompression thermo-commandé destiné à permettre ou empêcher la communication fluidique entre l'intérieur des réservoirs (4) et l'extérieur.

5. Collecteur (3) d'exploitation selon l'une quelconque des revendications précédentes, comprenant en outre un capteur (29) de température logé à l'intérieur du corps (6) du collecteur (3) d'exploitation et destiné à mesurer une température du fluide présent dans le collecteur (3) d'exploitation.

6. Collecteur (3) d'exploitation selon l'une quelconque des revendications précédentes, comprenant en outre un capteur (30) de pression logé à l'intérieur du corps (6) du collecteur (3) d'exploitation et destiné à mesurer une pression à l'intérieur du collecteur (3) d'exploitation.

7. Collecteur (3) d'exploitation selon l'une quelconque des revendications précédentes, comprenant en outre au moins un filtre (16) à particules situé en amont ou en aval de la vanne (11) manuelle.

8. Collecteur (3) d'exploitation selon l'une quelconque des revendications précédentes, dans lequel le canal (7) de distribution de fluide stocké dans les réservoirs (4) comprend un orifice (12) de distribution débouchant dans une région d'extrémité du corps (6) du collecteur (3) d'exploitation, le canal (8) de remplissage comprenant un orifice (18) d'alimentation, distinct de l'orifice (12) de distribution, débouchant dans la même région d'extrémité du collecteur (3) d'exploitation que l'orifice (12) de distribution.

9. Collecteur (3) d'exploitation selon l'une quelconque des revendications précédentes, dans lequel le canal (7) de distribution comprend une vanne (15) à limitation de débit disposée entre l'électrovanne (10) et la vanne (11) manuelle.

10. Collecteur (3) d'exploitation selon l'une quelconque des revendications précédentes, dans lequel le corps (6) du collecteur (3) d'exploitation est venu de matière et réalisé dans un matériau apte à être utilisé pour la circulation de gaz sous pression, par exemple un matériau en aluminium ou en inox.

11. Ensemble (1) de stockage et de distribution de fluide sous pression pour véhicule (2), comprenant un collecteur (3) selon l'une quelconque des revendications précédentes.

12. Véhicule (2), de préférence automobile, comprenant un ensemble (1) de stockage et de distribution de fluide sous pression selon la revendication précédente.

13. Procédé de distribution de fluide sous pression pour véhicule (2) au moyen d'un collecteur (3) d'exploitation selon l'une quelconque des revendications 1 à 10, comprenant les étapes suivantes :
a) la vanne (11) manuelle étant ouverte, ouverture de l'électrovanne (10), et
b) distribution de fluide depuis les réservoirs (4) vers un organe de consommation du fluide via le canal (7) de distribution.

14. Procédé de remplissage de réservoirs (4) de fluide sous pression au moyen d'un collecteur (3) d'exploitation selon l'une quelconque des revendications 1 à 10, comprenant les étapes suivantes :
a) la vanne (11) manuelle étant ouverte, fermeture de l'électrovanne (10), et
b) alimentation des réservoirs (4) en fluide depuis une source d'alimentation en ce fluide et via le canal (8) de remplissage.

15. Procédé d'évacuation de fluide stocké dans des réservoirs (4) de fluide sous pression au moyen d'un collecteur (3) d'exploitation selon l'une quelconque des revendications 2 à 10, comprenant les étapes suivantes :
a) fermeture de la vanne (11) manuelle, et
b) ouverture de la vanne (22) manuelle d'évacuation.

## Patentansprüche

1. Betriebsverteiler (3) für eine Anordnung (1) zum Speichern und Verteilen von unter Druck stehendem Fluid für ein Fahrzeug (2), wobei die Anordnung eine Vielzahl von Behältern (4) für unter Druck stehendes Fluid aufweist, wobei der Betriebsverteiler (3) aufweist:
- einen Körper (6) mit mehreren Verbindungsöffnungen (9), wobei jede Verbindungsöffnung (9) so konfiguriert ist, dass sie in Fluidverbindung mit einem Behälter (4) steht,
- ein Magnetventil (10),
- ein Handventil (11),
- einen Kanal (7) zur Verteilung des Fluids, das in den Behältern (4) gespeichert ist, wobei der Kanal (7) zur Verteilung des Fluids im Körper (6) ausgebildet ist und so konfiguriert ist, dass er über das Magnetventil (10) und das Handventil (11) in Fluidverbindung mit den Behältern (4) steht,
- einen Kanal (8) zum Befüllen der Behälter (4), der im Körper (6) ausgebildet und so konfiguriert ist, dass er über das Magnetventil (10) und das Handventil (11) in Fluidverbindung mit den Behältern (4) steht, wobei der Kanal (8) zum Befüllen der Behälter (4) ein zweites Rückschlagventil (17) aufweist, das einen Fluiddurchfluss in einer ersten Richtung zu den Behältern (4) ermöglicht und einen Fluiddurchfluss in einer entgegengesetzten Richtung verhindert,
**dadurch gekennzeichnet, dass** der Kanal (7) zum Verteilen des Fluids ein erstes Rückschlagventil (14) aufweist, das dazu bestimmt ist, einen Durchfluss von Fluid in der ersten Richtung zu den Behältern (4) zu verhindern und einen Durchfluss von Fluid in einer zweiten Richtung, die der ersten Richtung entgegengesetzt ist, zu ermöglichen, und dass das Handventil (11) ebenfalls verwendet wird, um eine Fluidverbindung zwischen dem Kanal (8) zum Befüllen der Behälter (4) und den Behältern (4) sicherzustellen.

2. Betriebsverteiler (3) nach dem vorhergehenden Anspruch, der außerdem einen ersten Kanal (20) zum Ablassen des in den Behältern (4) gespeicherten Fluids aufweist, der im Körper (6) des Betriebsverteilers (3) angeordnet ist und dazu dient, das Innere der Behälter (4) mit der Außenwelt fluidisch zu verbinden, wobei der erste Kanal (20) zum Ablassen des in den Behältern gespeicherten Fluids ein manuelles Ablassventil (22) aufweist, das dazu dient, die Fluidverbindung zwischen dem Inneren der Behälter (4) und der Außenwelt zu ermöglichen oder zu verhindern.

3. Betriebsverteiler (3) nach Anspruch 1 oder 2, der außerdem einen zweiten Kanal (23) zum Ablassen des in den Behältern (4) gespeicherten Fluids aufweist, der im Körper (6) des Betriebsverteilers (3) angeordnet ist und dazu dient, das Innere der Behälter (4) und die Außenwelt fluidisch miteinander zu verbinden, wobei der zweite Kanal (23) zum Ablassen des in den Behältern (4) gespeicherten Fluids eine erste thermisch gesteuerte Druckentlastungsvorrichtung (25) aufweist, die dazu dient, die Fluidverbindung zwischen dem Inneren der Behälter (4) und der Außenwelt zu ermöglichen oder zu verhindern.

4. Betriebsverteiler (3) nach dem vorhergehenden Anspruch, der außerdem einen dritten Kanal (26) zum Ablassen des in den Behältern (4) gespeicherten Fluids aufweist, der im Körper (6) des Betriebsverteilers (3) ausgebildet ist und dazu dient, das Innere der Behälter (4) mit der Außenwelt fluidisch zu verbinden, wobei der dritte Kanal (26) zum Ablassen des in den Behältern (4) gespeicherten Fluids eine zweite thermisch gesteuerte Druckentlastungsvorrichtung (28) aufweist, die dazu bestimmt ist, die Fluidverbindung zwischen dem Inneren der Behälter (4) und der Außenwelt zu ermöglichen oder zu verhindern.

5. Betriebsverteiler (3) nach einem der vorstehenden Ansprüche, der außerdem einen Temperatursensor (29) aufweist, der im Inneren des Körpers (6) des Betriebsverteilers (3) untergebracht ist und dazu bestimmt ist, eine Temperatur des im Betriebsverteiler (3) vorhandenen Fluids zu messen.

6. Betriebsverteiler (3) nach einem der vorstehenden Ansprüche, der außerdem einen Drucksensor (30) aufweist, der im Inneren des Körpers (6) des Betriebsverteilers (3) untergebracht ist und dazu dient, einen Druck im Inneren des Betriebsverteilers (3) zu messen.

7. Betriebsverteiler (3) nach einem der vorstehenden Ansprüche, der außerdem mindestens einen Partikelfilter (16) aufweist, der stromaufwärts oder stromabwärts des Handventils (11) angeordnet ist.

8. Betriebsverteiler (3) nach einem der vorstehenden Ansprüche, wobei der Kanal (7) zur Verteilung des Fluids, das in den Behältern (4) gespeichert ist, eine Verteileröffnung (12) aufweist, die in einen Endbereich des Körpers (6) des Betriebsverteilers (3) mündet, wobei der Kanal (8) zum Befüllen eine von der Verteileröffnung (12) getrennte Zufuhröffnung (18) aufweist, die in denselben Endbereich des Betriebsverteilers (3) mündet wie die Verteileröffnung (12).

9. Betriebsverteiler (3) nach einem der vorstehenden Ansprüche, wobei den Kanal (7) zum Verteilen ein Durchflussbegrenzungsventil (15) aufweist, das zwischen dem Magnetventil (10) und dem Handventil (11) angeordnet ist.

10. Betriebsverteiler (3) nach einem der vorstehenden Ansprüche, wobei der Körper (6) des Betriebsverteilers (3) aus einem Material besteht, das für die Zirkulation von Gas unter Druck geeignet ist, beispielsweise Aluminium oder Edelstahl.

11. Anordnung (1) zur Speicherung und Verteilung von unter Druck stehendem Fluid für ein Fahrzeug (2), aufweisend einen Verteiler (3) gemäß einem der vorstehenden Ansprüche.

12. Fahrzeug (2), vorzugsweise ein Kraftfahrzeug, mit einer Anordnung (1) zum Speichern und Verteilen von unter Druck stehendem Fluid gemäß dem vorstehenden Anspruch.

13. Verfahren zur Verteilung von unter Druck stehendem Fluid für ein Fahrzeug (2) mittels eines Verteilers (3) gemäß einem der Ansprüche 1 bis 10, aufweisend die folgenden Schritte:
a) bei geöffnetem Handventil (11) Öffnen des Magnetventils (10) und
b) Abgeben von Fluid aus den Behältern (4) über den Kanal (7) zum Verteilen an ein Fluidverbrauchsorgan.

14. Verfahren zum Befüllen von Behältern (4) für unter Druck stehendes Fluid (4) mittels eines Betriebsverteilers (3) gemäß einem der Ansprüche 1 bis 10, mit den folgenden Schritten:
a) bei geöffnetem Handventil (11) Schließen des Magnetventils (10) und
b) Zuführen von Fluid aus einer Fluidzufuhrquelle über den Kanal (8) zum Befüllen (8) zu den Behältern (4).

15. Verfahren zum Ablassen von gespeichertem Fluid, das in Behältern (4) für unter Druck stehendes Fluid (4) gespeichert ist, mittels eines Betriebsverteilers (3) gemäß einem der Ansprüche 2 bis 10, mit den folgenden Schritten:
a) Schließen des Handventils (11) und
b) Öffnen des manuellen Ablassventils (22).

## Claims

1. An operation manifold (3) for a pressurized-fluid storage and distribution assembly (1) for a vehicle (2), the assembly comprising a plurality of pressurized-fluid tanks (4), the operation manifold (3) comprising:
- a body (6) having a plurality of communication openings (9), each communication opening (9) being configured to be in fluidic communication with a tank (4),
- an electrically operated valve (10),
- a manual valve (11),
- a fluid distribution line (7) for distributing fluid stored in the tanks (4), the fluid distribution line (7) being formed in the body (6) and being configured to be in fluidic communication with the tanks (4) via the electrically operated valve (10) and the manual valve (11),
- a tanks (4) filling line (8), formed in the body (6) and configured to be in fluidic communication with the tanks (4), the tanks (4) filling line (8) comprising a second check valve (17) designed to allow fluid to flow in a first direction towards the tanks (4) and to prevent fluid from flowing in an opposite direction,
**characterized in that** the fluid distribution line (7) comprises a first check valve (14) designed to prevent fluid from flowing in the first direction towards the tanks (4) and to allow fluid to flow in a second direction, opposite to the first direction, and **in that** the manual valve (11) is also used to provide fluidic communication between the tanks (4) filling line (8) and the tanks (4).

2. The operation manifold (3) according to the preceding claim, further comprising a first line (20) for discharging fluid stored in the tanks (4), formed in the body (6) of the operation manifold (3) and designed to bring the inside of the tanks (4) into fluidic communication with the outside, the first line (20) for discharging fluid stored in the tanks comprising a manual discharge valve (22) designed to allow or prevent fluidic communication between the inside of the tanks (4) and the outside.

3. The operation manifold (3) according to claim 1 or 2, further comprising a second line (23) for discharging fluid stored in the tanks (4), formed in the body (6) of the operation manifold (3) and designed to bring the inside of the tanks (4) into fluidic communication with the outside, the second line (23) for discharging fluid stored in the tanks (4) comprising a first thermo-controlled pressure relief device (25) designed to allow or prevent fluidic communication between the inside of the tanks (4) and the outside.

4. The operation manifold (3) according to the preceding claim, further comprising a third line (26) for discharging fluid stored in the tanks (4), formed in the body (6) of the operation manifold (3) and designed to bring the inside of the tanks (4) into fluidic communication with the outside, the third line (26) for discharging fluid stored in the tanks (4) comprising a second thermo-controlled pressure relief device (28) designed to allow or prevent fluidic communication between the inside of the tanks (4) and the outside.

5. The operation manifold (3) according to any one of the preceding claims, further comprising a temperature sensor (29) housed inside the body (6) of the operation manifold (3) for measuring a temperature of the fluid present in the operation manifold (3).

6. The operation manifold (3) according to any one of the preceding claims, further comprising a pressure sensor (30) housed inside the body (6) of the operation manifold (3) for measuring a pressure inside the operation manifold (3).

7. The operation manifold (3) according to any one of the preceding claims, further comprising at least one particle filter (16) located upstream or downstream of the manual valve (11).

8. The operation manifold (3) according to any one of the preceding claims, wherein the distribution line (7) for distributing fluid stored in the tanks (4) comprises a distribution opening (12) opening into an end region of the body (6) of the operation manifold (3), the filling line (8) comprising a supply opening (18), distinct from the distribution opening (12), opening into the same end region of the operation manifold (3) as the distribution opening (12).

9. The operation manifold (3) according to any one of the preceding claims, wherein the distribution line (7) comprises a flow-limiting valve (15) arranged between the electrically operated valve (10) and the manual valve (11).

10. The operation manifold (3) according to any one of the preceding claims, wherein the body (6) of the operation manifold (3) is integral and made of a material suitable for use in pressurized gas circulation, for example an aluminum or stainless steel material.

11. A pressurized-fluid storage and distribution assembly (1) for a vehicle (2), comprising a manifold (3) according to any one of the preceding claims.

12. A vehicle (2), preferably a motor vehicle, comprising a pressurized-fluid storage and distribution assembly (1) according to the preceding claim.

13. A method of distributing pressurized fluid for a vehicle (2) by means of an operation manifold (3) according to any one of claims 1 to 10, comprising the following steps:
a) the manual valve (11) being opened, opening the electrically operated valve (10), and
b) distributing fluid from the tanks (4) to a fluid consuming member via the distribution line (7).

14. A method of filling pressurized-fluid tanks (4) by means of an operation manifold (3) according to any one of claims 1 to 10, comprising the following steps:
a) the manual valve (11) being opened, closing the electrically operated valve (10), and
b) supplying the tanks (4) with fluid from a supply source of this fluid via the filling line (8).

15. A method of discharging fluid stored in pressurized-fluid tanks (4) by means of an operation manifold (3) according to any one of claims 2 to 10, comprising the following steps:
a) closing the manual valve (11), and
b) opening the manual discharge valve (22).
